# EUROPEAN PATENT APPLICATION

(11) **EP 2 805 616 A1**
(43) Date of publication of application: **26.11.2014**
(21) Application number: 13169157.8
(22) Date of filing: 24.05.2013
(51) Int. Cl.: A01N 25/22, A01N 63/00, A01P 7/04

(54) **Spray formulation and its use in plant protection**

(71) Applicant: Fachhochschule Bielefeld, 33615 Bielefeld (DE)
(72) Inventor: Patel, Anant, 33604 Bielefeld (DE); Lohse, Rieke, 33602 Bielefeld (DE); Jakobs-Schoenwandt, Desiree, 32130 Enger (DE)
(74) Representative: Kröncke, Rolf

(57) **Abstract**

The present invention relates in a first aspect to a spray formulation. In particular, said spray formulation is a spray formulation adapted for colonisation of plants with spores of endophytes, in particular, entomopathogenic endophytes. The spray formulation according to the present invention includes a surfactant, an UV-protecting compound, a nutrient and spores of the endophytes. In another aspect, the present invention relates to the use of said spray formulation in plant protection, in particular, crop plant protection, and control of plant pests and plant pathogens. Moreover, a method of preventing or treating infestation of plants with plant pests or plant pathogens, is provided comprising the step of applying a spray formulation according to the present invention onto the plants or a part of the plants. Finally, a kit is provided comprising spores of endophytes and a spray formulation as defined herein.

## Description

The present invention relates in a first aspect to a spray formulation. In particular, said spray formulation is a spray formulation adapted for colonisation of plants with spores of endophytes, in particular, entomopathogenic endophytes. The spray formulation according to the present invention includes a surfactant, an UV-protecting compound, a nutrient and spores of the endophytes. In another aspect, the present invention relates to the use of said spray formulation in plant protection, in particular, crop plant protection, and pest control, e.g. against plant pathogens and plant pests. Moreover, a method of preventing or treating infestation of plants with plant pathogens and plant pests is provided comprising the step of applying a spray formulation according to the present invention onto the plants or a part of the plants. Finally, a kit is provided comprising spores of endophytes and a spray formulation as defined herein.

### Prior art

Protection of plants against plant pathogens and plant pests is an ongoing demand in agriculture. Typically, commercial pesticides including insecticides are based on chemical entities. However, there is a continued demand from the government and the consumer to reduce chemical pesticides and insecticides accordingly. In particular, the public ask for bio food or organic products where harmful chemical components and chemical pesticides or insecticides are reduced or eliminated.

Moreover, the efficacy of many commercially available pesticides (e.g. insecticides, fungicides, acaricides) based on chemical entities has decreased due to increasing resistance in the plant pathogens including pests and weed.

Hence, there is an ongoing demand for alternative or complementary plant protection, like crop protection strategies including application of new biopesticides for pest control.

The term endophyte, as first introduced in 1866, broadly refers to any organism found within tissues of living autotrophs. The working definition for the term later was introduced by Petrini in 1991 and has since been accepted. It defines endophytes as organisms that at some time in their life colonise internal plant tissues without causing an apparent harm to their host. Endophytes comprise a diverse polyphyletic group of microorganisms that can exhibit more than one type of life history at distinct life stages.

Endophytes may be transmitted either vertically (directly from parent to offspring) or horizontally (among individuals). Fungal endophytes are described in the art in being useful as biopesticides. Endophytes may benefit host plants by preventing pathogenic organism from colonising them. That is, a remarkable percentage of the endophytes have entomopathogenic activity. For example, by mycosis and/or release of a wide range of compounds, a control of plant diseases and plant pests, e.g. combating insect pests or plant pathogens including preventing infestation of plants with plant disease and plant pests is possible.

Pioneer work on entomopathogenic endophytes was conducted in *Beauveria bassiana* (Balsamo) Vuillemin (Ascomycota: Hypocreales) an ubiquitous soil-borne fungus that is bioactive against a wide insect host range (>700 insect species) and one of the most commercialized fungal biopesticides. *B. bassiana* is an entomopathogenic endophyte able to colonize a wide array of plant species many of which of economic interest. Moreover, the endophytic *B. bassiana* shows efficacy against a wide range of insect pests from within the plants and has the potential of becoming a cost-effective biocontrol agent. For example, the *Beauveria bassiana* strain ATCC 74040 is described as available tool for the control of pests, said strain is commercialised as biopesticide "Naturalis" by Troy Biosciences, but not for endophytic use, yet.

For example, in WO 2011/117351 a new biopesticide and methods for pests control are described based on the endophytic *Beauveria bassiana,* DSM24665. As described therein, *Beauveria bassiana* allows endophytic colonisation of various plants including important commercial plants, thus, allowing to provide a protection against pests compared to epiphytic colonisation with *B. bassiana* of said crops.

Application of the bio-pesticides may be conducted by various means depending on the time point of application as well as the part of the plant to be treated.

In case of spray formulations for the treatment of the leaves or sprouts or shoots, the spray formulation must fulfil certain requirements. In particular, when spraying the spray formulation on the plants, e.g. the leaves, the contact angle of the spray drops with the leaves must be sufficient to allow spreading of the formulation over the plant surface and increasing points of entry for the endophytes. Moreover, protection against the environment must be provided, for example, protection against UV radiation or dehydration of the endophytes before the endophytes can colonise the plant accordingly. For example, humidity must be sufficient to allow germination of spores.

Hence, an object of the present invention is to provide new spray formulations overcoming the drawbacks described above, in particular, being useful for spraying on leaves or shoots allowing a high colonisation rate of the plant. Another aim of the present invention is to provide spray formulations for use in the plant protection as well as methods of preventing or treating infestation of plants with plant diseases and pest including plant pathogens and insect pests.

### Summary of the present invention

In a first aspect, the present invention relates to a spray formulation adapted for colonisation of plants with spores of endophytes, in particular, of entomopathogenic endophytes. The spray formulation comprises:
- a surfactant, preferably in a range of from 0.01 to 5 wt.-% based on the total weight of the spay formulation;
- an UV-protecting compound, preferably in a range of from 0.05 to 7 wt.-% based on the total weight of the spray formulation;
- a nutrient, preferably in a range of from 0.1 to 7 wt.-% based on the total weight of the spray formulation;
- spores of the endophytes in an amount of 10² to 10⁸ spores/mL spray formulation; and
- optionally, hydrophilic liquid, in particular, water.

In another aspect, the present invention relates to the spray formulation according to present invention for use in plant protection, in particular, crop plant protection, against plant pests and plant pathogens, like insect pests.

In another embodiment, the present invention relates to a method of preventing or treating infestation of plants with plant pathogens and plant pests, in particular, of crop plants with crop pests whereby the spray formulation according to the present invention is applied on the plants for allowing colonisation thereof with endophytes.

Finally, the present invention provides a kit comprising spores of endophytes, preferably, entomopathogenic endophytes and, either in the same or in a separate container, a spray formulation according to the present invention.

### Brief description of the drawings

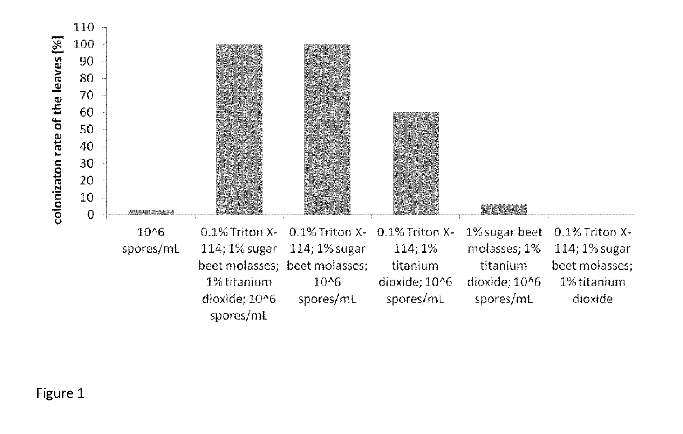

Figure 1: In figure 1 the colonisation rate of oilseed rapes leaves are shown whereby the spores are dispersed either in water or in a spray formulation according to the present invention. In addition, controls with no spores, rightmost column, and without surfactant, second column from the right, are shown.

### Detailed description of the present invention

In a first aspect, the present invention relates to a spray formulation adapted for colonisation of plants with spores of endophytes, in particular, of entomopathogenic endophytes comprising:
- a surfactant, preferably in a range of from 0.01 to 5 wt.-% based on the total weight of the spay formulation;
- an UV-protecting compound, preferably in a range of from 0.05 to 7 wt.-% based on the total weight of the spray formulation;
- a nutrient, preferably in a range of from 0.1 to 7 wt.-% based on the total weight of the spray formulation;
- spores of the endophytes in an amount of 10² to 10⁸ spores/mL spray formulation; and
- optionally, hydrophilic liquid, in particular, water.

The spray formulation according to the present invention is able to overcome the problems mentioned above. For example, when simply spraying the spores dispersed in water on the plants, only a few plants will be colonised. In contrast, the spray formulation according to the present invention including a surfactant, an UV-protecting compound and a nutrient together with the spores of the endophytes allows to increase the amount of spores maintaining on the treated leaves as well as successful colonisation of the leaves. That is, since the amount of spores maintained on the plants is increased, it is possible to decrease the number of spores to be applied on the plants. Not only colonisation of the plants was improved but also insect mortality. Moreover, by colonisation of the plants with endophytes a life long protection is possible. That is, the formulation according to the present invention improves the colonisation of the plants with the endophytes, e.g. improving the rate of colonisation after treatment with the spores, but also the time of colonisation and the grade of colonisation of each part of the plants. In other words, the formulation improves the penetration or infiltration of the spores, in particular. the germinated spores and the mycelium into the plants or part of the plants. Improvement includes the time of colonisation as well as the extent of colonisation of the plant or part of the plant.

That is, the spray formulation according to the present invention comprising a surfactant, an UV-protecting compound, a nutrient and the spores of the endophytes demonstrate successful colonisation of plants after treatment. The spray formulation according to the present invention is a spray formulation wherein the surfactant is preferably present in a range of from 0.01 to 5 wt.-% based on the total weight of the spray formulation; an UV-protecting compound, preferably in a range of from 0.05 to 7 wt.-% based on the total weight of the spray formulation; a nutrient, preferably in a range of from 0.1 to 7 w.-% based on the total weight of the spray formulation; and spores of the endophytes, preferably in an amount of 10² to 10⁸ spores/mL spray formulation.

The amount of surfactant is preferably in a range of from 0.01 to 5 wt.-% based on the total weight of the spray formulation, like in a range of from 0.05 to 2 wt.-% based on the total weight of the spray formulation, in particular, in the range of from 0.1 to 0.5 wt.-% based on the total weight of the spray formulation. The amount of UV protecting comound is preferably in a range of from 0.05 to 7 wt.-% based on the total weight of the spray formulation, like in a range of from 0.2 to 5 wt.-% based on the total weight of the spray formulation, in particular, in the range of from 0.5 to 2 wt.-% based on the total weight of the spray formulation. The amount of nutrient is preferably in a range of from 0.1 to 7 wt.-% based on the total weight of the spray formulation, like in a range of from 0.2 to 5 wt.-% based on the total weight of the spray formulation, in particular, in the range of from 0.5 to 2 wt.-% based on the total weight of the spray formulation.

The amount of spores may be in the range of from 10² to 10⁸ spores/mL spray formulation. Preferably, the amount of spores is in the range of from 10³ to 10⁷ spores/ml spray formulation, e.g. in the range of from 10⁴ to 10⁷, like 10⁴ to 10⁶ spores/mL spray formulation. The skilled person is well aware of suitable methods to determine the amount of spores necessary to prevent or treat infestation of the plants accordingly.

Typically, the remaining in the spray formulation is a hydrophilic liquid, like water, or other hydrophilic solvents or other dispersion medium not harming the spores and being able to disperse homogenously the components of the spray formulation. The spray formulation may also be in form of a concentrate or may be in solid form ready for reconstitution by the hydrophilic liquid, e.g. in form of a wettable powder. Furthermore, the preferred amounts of the ingredients of the spray formulation as identified above refer to the total weight of a ready to use spray formulation. That is, the spray formulation may be in form of a ready to use solution or may be in form of a concentrate either containing the spores of the endophytes or not. Furthermore, the spray formulation may be provided in form of a wettable powder, for example, wherein the powdered spray formulation is supported on a carrier. Preferably, the carrier may be a carrier selected from diatomaceous earth, talc, clay, vermiculite, alginate gels, sugars, starch matrices or synthetic polymers. The concentrate of the spray formulation either in liquid or in solid form, may be reconstituted shortly before applying said spray formulation on the plants. Typically, the reconstitution is affected by the hydrophilic liquid, in particular, water. That is, the spray formulation may be in form of a wettable powder or granules with inert or nutritional carriers.

The spray formulation according to the present invention may contain additional components. For example, the spray formulation according to the present invention may contain an adhesive agent or sticker for increasing adhesion of the plants of the spray formulation. Suitable adhesive agents or stickers are: sugar beet molasses, skimmed milk, alginate, oil or sorbitol. It is preferred, that the adhesive agent is present in the range of from 0.1 to 5 wt.-% based on the total weight of the spray formulation.

Furthermore, the spray formulation may contain other adjuvants. For example, the spray formulation may comprise additionally a humectant. The humectant delays the evaporation of the liquid, typically, water, in the drops sprayed on the leaves.

As used herein, the term "humectant" include compounds which may delay evaporation of the liquid of the spray formulation according to the present invention. In addition, the term "humectants" include compounds with liquid-, in particular, water-retaining properties e.g. to provide an environment favouring germination of the spores. Typical examples of humectants useful according to the present invention include gelatine, carboxymethylcellulose or xanthan. Furthermore, the spray formulation may contain filler. Said filler is useful to allow uniform preparation of the spray formulation, e.g. may suppress agglutination of components present in the spray formulation. Suitable examples of fillers include: clay, lactose or talc. The filler may be present in the range of from 15 to 45 wt.-% based on the total weight of the spray formulation. Moreover, the spray formulation may contain a stimulant facilitating germination of the spores and/or entry of the endophytes into the plant. Suitable examples of stimulants are: corn meal, chitosan or gelatine. Preferably, the stimulants are present in the range of from 0.1 to 1 wt.-% based on the total weight of the spray formulation. Other suitable auxiliaries include anti foaming agents, said anti foaming agents which are well known to the skilled person, are preferably in the range of 0.01 to 1 wt.-% based on the total weight of the spray formulation. Furthermore a thickener may be present, the thickener may be present in the range of from 0.1 to 3 wt.-% based on the total weight of the spray formulation.

Depending on the type of application of the spray formulation and storage of the spray formulation, other auxiliaries or adjuvants may be present in the spray formulation according to present invention.

In this connection, it is noted that the term "comprise" and "comprising" or "contain" or "containing" which are used interchangeably herein include the embodiment of "consist" or "consisting of".

The spray formulation according to present invention contains a nutrient for the germinating spores. Said nutrient is preferably selected from a carbon source, in particular, a sugar beet molasses, sugars like sucrose or glucose or yeast extract.

The surfactant present in the spray formulation according to the present invention is preferably a non-ionic surfactant. Typical examples of suitable surfactants include Trisiloxane-based surfactants, Triton X-114 or other members of the Triton family. Furthermore, the surfactant is preferably a surface active substance having a surface tension of less than 40 mN/m, e.g. of less than 30 mN/m. The surfactant allows to improve the contact angle of the formulation on the leaves or shoots and to reduce the surface tension.

Moreover, the UV-protecting compound is preferably selected from titanium dioxide, sugar beet molasses or methyl red. That is, based on the sun beam effect, UV-radiation is reflected or absorbed. For bringing titanium dioxide into solution, it may be necessary to acidify the formulation allowing the titanium dioxide to be present in form of a suspension.

The skilled person is well aware or can easily derive at suitable ingredients of the spray formulation, in particular, suitable surfactants, UV-protecting compounds and nutrients. The components of the spray formulation are selected in a way to minimize washing off the spray drops on the leaves, to increase the contact area between the plant, e.g. the leave, and the drops and to ease entry of the endophytes into the plant. In particular, the skilled person is well aware of selecting suitable components which do not harm viability of spores.

Typically the spores of the endophytes, in particular, of entomopathogenic endophytes, are present in an amount of from 10² to 10⁸ spores/mL spray formulation, like 10⁴ to 10⁷ spores/mL spray formulation based on the ready to use formulation.

Depending on the circumstances, the spray formulation according to the present invention may be in form of a single formulation or may be present in form of two or more separate parts in different containers. In an alternative embodiment, the spray formulation may be provided in separate parts containing on the one hand the spores, in a separate part the hydrophilic liquid, like water for reconstitution of a concentrate being present in a third part of the spray formulation according to the present invention.

The spray formulation according to the present invention is suitable for spraying by 0.5 to 4 bar with a commercial spray nozzle or in an ultra-low volume spray. Of course it is possible to apply the formulation by other means including brushing the plants or part of the plants or dipping etc.

As identified before, the endophytes are preferably entomopathogenic endophytes, thus, enabling combating pest infestation or plants.

It is preferred, that the spores of the endophytes are submerged conidiospores - blastospores or aero conidia or mixtures thereof. It is particular preferred, that a mixture of conidiospores and blastospores or conidiospores alone is used.

It is preferred, that these entomopathogenic endophytes are selected from the fungi *Beauveria bassiana* or *Metarhizium anisopliae.*

The spray formulation according to the present invention is adapted for colonisation of plants with spores of endophytes. It is preferred, that said plants are crop plants or ornamental plants, in particular, of oilseed rape, tomato, corn *(Zea mays*), grain, cotton, potato, sugar beet, coffee plants, grapevine, vicia faba, chickpea, tobacco, soy, cacao plants, opium poppy, bean, cabbage, pine, rice, date palm, banana, orchids or sorghum. For example, the plants are plants multiplied and grown by micropropagation.

That is, the spray formulation represents a suitable biopesticide for plant protection of economically valuable crop plants or ornamental plants. In particular, the spray formulation allows to protect said plants from plant pathogens and plant pests, like insect pests, from within, just as transgenic plants do. However, in contrast to transgenic plants, the spray formulation useful as a biopesticide allow to colonise said plants with entomopathogenic endophytes, thus protecting them from the pest or the plant pathogen accordingly.

The spray formulation is particularly useful in plant protection like crop plant protection, further, the spray formulation is useful in protection against plant pathogens and plant pests, like crop pests.

As used herein, the term "plant pests" include insects, nematodes, mites, ticks and the like. The term "plant pathogens" as used herein include microorganisms like fungi or bacteria responsible or being part of plant diseases.

That is, the spray formulation may include spores of the *B. bassiana* endophyte allows to protect against *Ceutorhynchus napi, Brassicogethes aeneus or Ceutorhynchus assimilis, Plutella xylostellain* oilseed rapes plants. For example, the plants are oilseed rapes and the endophyte is *B. bassiana,* like *B. bassiana* isolate DSM 24665.

In another aspect, the present invention relates to a method of preventing or treating infestation of plants with plant pathogens and plant pests, in particular, of crop plants with crop pests, including or comprising the step of applying the spray formulation according to the present invention to plants, in particular, part of the plants for allowing colonisation of the plants with endophytes.

The term "plants" as used herein includes also parts of the plants, like leaves, seed, stems, branches, roots, shoots or sprouts unless otherwise indicated. It is preferred, that the spray formulation according to the present invention is at least applied on the leaves and shoots of the plant. If necessary, bringing out the spray formulation onto the plants may be repeated. It is preferred that the method according to present invention is a method wherein a spore of the *B. bassiana* isolate, e.g. the *B. bassiana* strain deposited under the number DSM 24665, are sprayed on oilseed rapes for protecting said plants against insect pests, like *Ceutorhynchus napi, Brassicogethes aeneus or Ceutorhynchus assimilis.*

*Beauveria bassiana* which may be used in the spray formulation according to the present invention as well as in the methods according to the present invention are effective in infecting and killing a wide variety of economically important insects, particularly, but without being limited thereto, soil-born insects, but also including some ground- and canopy-dwelling insects. Without being limited thereto, insects which may be controlled by the *Beauveria bassiana* include root weevils, rootworms, wireworms, maggots, bugs, aphids, beetles, root weevils, borers, fruit flies, soil grubs, root maggots, termites, and ants, particularly corn rootworm *(Diabrotica spp.),* black vine weevil (*Otiorhynchus sulcatus*)*,* citrus root weevil (*Diaprepes abbreviatus*), sweet potato weevil (*Cylas formicarius*), sugarbeet root maggot (*Tetanops myopaeformis*), cabbage maggot (*Delia radicum*), onion maggot (*Delia antigua*), turnip maggot (*Delia floralis*), seedcorn maggot (*Delia platura*), carrot rust fly (*Psila rosae*), Japanese beetle (*Popillia japonica*), European chafer (*Rhizotrogus majalis*), coffee berry borer (Hypothenemus hampei), stem borer (Chilo partellus), subterranean termite (*Reticulitermes* and *Coptotermes spp*.). In addition, certain canopy dwelling, especially bark dwelling, insects may be controlled by *Beauveria bassiana* of this invention. These insects include, but are not limited to, emerald ash borer (*Agrilus planipennis*), gypsy moth (*Lymantria dispar*), and the pecan weevil (*Curculio caryae*).

The spray formulation according to the present invention is suitable as bio-pesticide against herbivorous insects or other pests, as detailed in the following:
**maize pests:** Corn earworm *(Helicoverpa zea*) *,* Fall armyworm (*Spodoptera frugiperda*), Common armyworm (*Pseudaletia unipuncta*), Stalk borer *(Papaipema nebris*), Corn leaf aphid (*Rhopalosiphum maidis*), European corn borer (*Ostrinia nubilalis*) (ECB), Corn silkfly *(Euxesta stigmatis),* Lesser cornstalk borer (*Elasmopalpus lignosellus*), Corn delphacid (*Peregrinus maidis*), Western corn rootworm (*Diabrotica virgifera virgifera* LeConte), Southwestern corn borer (*Diatraea grandiosella*), Maize weevil (*Sitophilus zeamais*)
**rapeseed pests:** Meligethes aeneus, Harlequin bug (*Murgantia histrionica*), Flea beetles *(Phyllotreta* sp.), Diamondback moth *(Plutella xylostella),* Bertha armyworm (*Mamestra configurata*), Root maggot (*Delia* sp.), Grasshoppers, Lygus bugs *(Lygus spp.),* Bronzed field beetle larvae, Snails and slugs.
**cotton pests:** Boll weevil, cotton bollworm pink bollworm (*Pectinophora gossypiella)*; the chili thrips (*Scirtothrips dorsalis*)*,* and the cotton seed bug (*Oxycarenus hyalinipennis*).
**Cacao pests:** Cocoa pod borer (Conopomorpha cramerella), cocoa mirids or capsids
**Wheat pests:** The Flame (*Axylia putris*), Rustic shoulder-knot (*Apamea sordens*), setaceous, hebrew character (*Xestia c-nigrum*), Turnip moth (*Agrotis segetum*).
**Sorghum pests:** Chilo partellus, Busseola fusca, Sesamia calamistis.

In another aspect, the present invention provides a kit comprising spores of endophytes, preferably entomopathogenic endophytes and in a separate container a spray formulation according to the present invention without containing said spores of said endophytes. For example, the spores of the endophytes may be present in a lyophilised form or dried form while the remaining spray formulation according the present invention excluding the spores of said endophytes may be in form of a concentrate, in a lyophilised form or as a ready to use formulation. The kit may be used for preparing the spray formulation according to the present invention.

The kit according to present invention is particularly useful in the method according to present invention for preventing or treating infestation of plants with plant pathogens and plant pests including insect pests, in particular, e.g. preventing or treating infestation of crop plants with crop pests. The spray formulation ready for use may be prepared immediately before spraying the spray formulation onto the plants. The skilled person is well aware of the suitable means for spraying the spray formulation.

The present invention will be described further by the way of examples without limiting the same thereto.

### Example 1

### Preparation of spray formulation

Spray formulation as shown in table 1 have been prepared as follows:
The spray formulations were prepared as water-based solutions. All components, with the exception of the *B. bassiana* spores, were sterilized before using. The surfactants Break-Thru S240 (Evonik Industries, Essen, Germany) and Trition X 114 (Applichem, Darmstadt, Germany), the humectant gelatine 280 Bloom (Gelita, Eberbach, Germany) and the nutrient sugar beet molasses (Südzucker, Warburg, Germany) were mixed with boiling water and stored at room temperature until spores were added. Immediately after their addition the formulation were mixed carefully and sprayed on the plants.

For formulations with titanium dioxide 2ml/L of a diluted nitric acid solution having a pH 3.38 was added to allow the titanium dioxide to be present in form of a suspension.

**Table 1**

| **No.** | **Surfactant** | **Humectant** | **Nutrient** | **UV-protecting compound** | **Spores** |
|---|---|---|---|---|---|
| 1 | Break-Thru S240 (0.1 %) | | sugar beet molasses (1%) | titanium dioxide (1 %) | 10⁶ spores/mL |
| 2 | Trition X 114 (0.1%) | | sugar beet molasses (1%) | | 10⁶ spores/mL |
| 3 | Break-Thru S240 (0.1 %) | gelatine 280 Bloom (0.1 %) | | | 10⁶ spores/mL |
| 4 | Trition X 114 (0.1 %) | gelatine 280 Bloom (0.1 %) | | | 10⁶ spores/mL |
| 5 | Break-Thru S240 (0.1 %) | gelatine 280 Bloom (0.1 %) | sugar beet molasses (1%) | | 10⁶ spores/mL |
| 6 | Trition X 114 (0.1 %) | gelatine 280 Bloom (0.1 %) | sugar beet molasses (1%) | | 10⁶ spores/mL |
| 7 | Break-Thru S240 (0,1 %) | | | | 10⁶ spores/mL |
| 8 | Trition X 114 (0.1 %) | | | | 10⁶ spores/mL |
| 9 | Break-Thru S240 (0.1 %) | gelatine 280 Bloom (0.1 %) | sugar beet molasses (1%) | | |
| 10 | Trition X 114 (0.1 %) | gelatine 280 Bloom (0.1 %) | sugar beet molasses (1%) | | |
| 11 | Break-Thru S240 (0.1 %) | | Bakers yeast (1%) | | |
| 12 | water | | | | 10⁶ spores/mL |

### Example 2

### Testing of spray formulations on oilseed rape plants

The formulations were sprayed with a commercial spray nozzle on the 6th secondary leaf of 7 weeks old oilseed rape plants and incubated at approximately 45 % relative humidity and 20°C. At the first 48 h after application the treated leaves were wrapped with a plastic bag, so that a relative humidity of 95 % was obtained. The applied amount of spray formulation was determined with the weight of the tank before and after spraying. After 7 weeks the colonization of the 8th secondary leaves were detected with PCR, re-isolation and microscopy.

### Example 3

The spray formulations were applied on the leaf apex of oilseed rape plants and incubated. After 2 weeks in control cross-sections any fungal grow could be shown, but in cross-sections of mid rips of plants treated with *B. bassiana* intercellular fungal growth could be shown, see figure 1. While high colonization rates are shown for formulations containing the surfactant, the nutrient, the spores and, optionally, the UV-protecting compound, leaving out the surfactant or the nutrient reduces the colonization rates remarkably. The control outmost right not containing spores and the control with water only, outmost left, demonstrate almost no colonization.

Out of the different spray formulation containing different amounts of humectants, nutrients, UV-absorbing components and surfactants, formulation No. 2 of table 1 gave the best results containing Triton X-114 as surfactant, sugar beet molasses as nutrient and titanium dioxide as UV-protecting compound. Compared to water treatment the use of UV-protectors could increase the viability of treated spores after UV-radiation for 60 minutes by 60 %, furthermore germinations and growth of the endophytes on leaves, penetration and colonisation as well as efficacy in bioassays with *Plutella xylostella* as a crop pest demonstrates the usefulness of the spray formulation according to the present invention.

## Claims

1. Spray formulation adapted for colonisation of plants with spores of endophytes, in particular, entomopathogenic endophytes comprising:
- a surfactant, preferably in a range of from 0.01 to 5 wt.-% based on the total weight of the spray formulation;
- an UV-protecting compound, preferably in a range of from 0.05 to 7 wt.-% based on the total weight of the spray formulation;
- a nutrient, preferably in a range of from 0.1 to 7 wt.-% based on the total weight of the spray formulation;
- spores of the endophytes in an amount of 10² to 10⁸ spores/mL spray formulation; and,
- optionally, hydrophilic liquid, in particular, water.

2. The spray formulation according to claim 1 for colonization of crop plants or ornamental plants, in particular, of oilseed rape, tomato, corn (*Zea mays*), grain, cotton, potato, sugar beet, coffee plants, grapevine (*Vicia faba*), chickpea, tobacco, soy, cacao plants, opium poppy, bean, cabbage, pine, rice, date palm, banana, orchids, or sorghum.

3. The spray formulation according to claim 1 or 2 wherein the spores of said endophytes are conidiospores, blastospores or aeroconidia or mixtures thereof.

4. The spray formulation according to any one of the preceding claims wherein the entomopathogenic endophytes are selected from the fungi *Beauveria bassiana* and *Metarhizium anisopliae.*

5. The spray formulation according to any one of the preceding claims further comprising an adhesive agent, preferably in the range of from 0.1 % to 5 % wt.-% based on the total weight of the spray formulation.

6. The spray formulation according to any one of the preceding claims further comprising at least one of the following components of a humectant preferably in the range of from 0.1 to 5 wt.-% based on the total weight of the spray formulation, a filler, preferably in the range of from 15 to 45 wt.-% based on the total weight of the spray formulation, a stimulant, preferably in the range of from 0.01 to 1 wt.-% based on the total weight of the spray formulation, an anti foam, preferably in the range of from 0.01 to 1 wt.-% based on the total weight of the spray formulation, and/or a thickener, preferably in the range of from 0.1 to 3 wt.-% based on the total weight for the spray formulation.

7. The spray formulation according to any one of the preceding claims wherein the surfactant is a non-ionic surfactant, in particular, selected from Triton X-114 or a trisiloxane or surface active substances having a surface tension of less than 40 mN/m.

8. The spray formulation according to any one of the preceding claims wherein the humectant is selected from gelatine, carboxymethylcellulose or xanthan.

9. The spray formulation according to any one of the preceding claims wherein the nutrient is selected from carbon sources like sugar beet molasses, sugars, like sucrose and glucose, or yeast extract.

10. The spray formulation according to any one of the preceding claims for use in plant protection, in particular, crop plant protection, against plant pathogens and plant pests, in particular, crop pests including insect pests.

11. The spray formulation according to any one of claims 1 to 10 wherein the spray formulation is adapted for application as an emulsion or a wettable powder.

12. A method of preventing or treating infestation of plants with plant pathogens and plant pests, in particular, of crop plants with crop pests and pathogens, including the step of applying a spray formulation according to any one of claims 1 to 11 to plants for allowing colonization of said plants with endophytes, in particular, with entomopathogenic endophytes.

13. The method according to claim 12 or 13 wherein the plants are oil seed rapes and/or the endophyte is *Beauveria bassiana* isolate deposited under the No.DSM 24665.

14. Kit comprising spores of endophytes, preferably entomopathogenic endophytes, and, in a separate container, a spray formulation as defined in any one of claims 1 to 11 without containing said spores of said endophytes, in particular, for use in the preparation of a spray formulation according to any one of claims 1 to 11.

15. The kit according to claim 14 wherein the spores are in a lyophilised form or dried form and the remaining spray formulation is in form of a concentrate, lyophilised or ready to use formulation.
